Europäisches Patentamt

(19) **European Patent Office**

**Office européen des brevets**

(11) Publication number: **0 006 697**

**. B2**

(12) **NEW EUROPEAN PATENT SPECIFICATION**

(45) Date of publication of the new patent
specification: **03.12.86**

(21) Application number: **79301070.3**

(22) Date of filing: **06.06.79**

(51) Int. Cl.⁴: **C 08 F 291/00,** C 08 F 2/18,
C 08 F 2/16

(54) An improved process for forming emulsion/suspension polymers and polymers so formed.

(30) Priority: **29.06.78 US 920599**

(43) Date of publication of application:
**09.01.80 Bulletin 80/01**

(45) Mention of the opposition decision:
**27.04.83 Bulletin 83/17**

(45) Publication of the grant of the patent:
**03.12.86 Bulletin 86/49**

(84) Designated Contracting States:
**BE DE FR GB IT NL SE**

(56) References cited:
**DE-A-2 427 953**
**FR-A-2 401 174**
**GB-A-1 458 367**
**US-A-3 832 318**
**US-A-3 887 652**
**US-A-3 944 631**
**US-A-4 011 283**
**US-A-4 076 920**

(73) Proprietor: **GENERAL ELECTRIC COMPANY**
**1 River Road**
**Schenectady New York 12305 (US)**

(72) Inventor: **Wei, Chung Hwei**
**3209 Powhatan Drive**
**Wilmington Delaware 19808 (US)**

(74) Representative: **Smith, Sydney et al**
**High Holborn House 52/54 High Holborn**
**London WC1V 6SH (GB)**

Courier Press, Leamington Spa, England.

## Description

The present invention relates to an improvment in multistep emulsion/suspension polymerization techniques for forming polymeric materials.

A variety of multistep polymerization procedures involving one or more initial emulsion and one or more later suspension polymerization steps are known. The use of the terminology "emulsion/suspension polymerization" in describing the present invention is intended to relate to this general type of polymerization procedure. Thus, in U.S. Patent No. 3,657,172 to Ruth E. Gallagher et al., rubber-containing interpolymers are formed by suspension polymerizing from about 40% to about 99% by weight of the interpolymer, of vinyl monomer in the presence of a previously formed aqueous emulsion of particles comprising from about 0.5% to about 50%, by weight of the interpolymer, of a hard inner core of a polymer having a glass transition temperature (Tg) above about 25°C. and from about 0.5% to about 59%, by weight of the interpolymer, of an outer layer comprising a crosslinked rubber having a Tg of less than about 25°C. U.S. Patent No. 3,832,318 to Ruth E. Gallagher et al. describes the formation of rubber-containing interpolymers with are prepared by suspension polymerizing from about 40% to about 98%, by weight of the interpolymer, of a vinyl monomer in the presence of from about 2% to about 60%, by weight of the interpolymer, of particles of a cross-linked acrylate rubber having a Tg of less than about 25°C. A more recent example of such multistep emulsion/suspension polymerization procedures is described in U.S. Patent No. 3,944,631 to A. J. Yu et al. which, in one embodiment, describes the suspension polymerization of from about 15% to about 90%, by weight of the interpolymer, of styrene and acrylonitrile in the presence of an aqueous latex of interpolymer particles comprising from about 5 to about 50%, by weight of the interpolymer, of a crosslinked (meth)acrylate component and from about 5% to about 35%, by weight of the interpolymer, of a crosslinked styrene-acrylonitrile component.

In the above types of processes, an emulsifying agent is used in the initial emulsion polymerization step or steps to form a latex of polymer particles. This emulsion polymerization portion of the process is performed using conventional emulsion polymerization techniques. The latex, or the emulsion resin particles isolated therefrom, is then used as one of the ingredients during one or more later, conventional suspension polymerization procedures. The presence of residual emulsifying agent in either the latex, or the product isolated therefrom, however, has a tendency to interfere with the dispersing ability of the suspending agent used in the suspension polymerization step or steps. This often leads to a certain degree of polymer flocculation during the suspension polymerization step or steps which can be especially deleterious in plant scale polymerizations where the reaction mixture needs to be pumped through piping during commercial operations. The presence of polymer flocculation tends to interfere with such pumping operations.

We have found that improved results are obtained if homogenisation is used to disperse the monomeric reactants during one or more of the emulsion polymerization steps including reduction of the amount of emulsifier needed during that portion of the overall process.

The present invention therefore provides an aqueous, emulsion/suspension polymerization process for forming polymeric materials comprising at least one emulsion polymerization reaction of monomer in water with the aid of an emulsifier and at least one subsequent suspension polymerization process in which the emulsion polymerization product is used as a reaction ingredient, characterized in that the monomer in water is subjected to mechanical homogenisation prior to the emulsion polymerization reaction, both the mechanical homogenisation and the emulsion polymerization being effected in the presence of a reduced amount of emulsifier compared to that conventionally used when homogenisation is not employed.

In the process of the present invention the likelihood of emulsifier-suspending agent interference during the later suspension polymerization portion or portions of the process is reduced. The later suspension polymerization phase uses the emulsion polymerized product, or the latex containing it, as a reaction ingredient. The present process aids in reducing the amount of polymer flocculation and consequent reactor fouling from the emulsion polymerization portion of the process and aids in increasing the bulk density of the resin during the latter suspension polymerization portion of the process.

The terminology "emulsion/suspension polymerization process" is to be understood as referring to those aqueous, multistep processes wherein one or more emulsion polymerizations are employed to form a polymer latex (and the polymer product contained therein) which is used as an ingredient in one or more later suspension polymerization procedures.

One class of such "emulsion/suspension polymerization" processes involves the initial polymerization of rubber monomers, such as, acrylic, methacrylic or olefinic monomers, optionally in the presence of an effective amount of a polyethylenically unsaturated crosslinker monomer, to form a latex of rubber polymer particles. This latex, or the rubbery particles, are then used as one ingredient in the later suspension polymerization of a monomer which would form a relatively more rigid polymer composition, e.g., a vinyl halide or styrene-acrylonitrile resin. Further details regarding certain preferred embodiments of such prior art emulsion/suspension processes are described in the aforementioned U.S. Patent Nos. 3,657,172; 3,832,318; and 3,944,631, which teach representative ingredients, and amounts thereof, which may be used in practicing such prior art procedures, as well as a description of the necessary process parameters for such processes. Also included within the scope of the present invention is an emulsion/

2

suspension polymerization process for forming acrylonitrile-butadiene-styrene (ABS) polymers. These polymers comprise either: (a) from about 60 to 90% of a styrene-acrylonitrile copolymer (in a 60—80:40—20 weight ratio) graft polymerized onto from about 10 to about 40% of an acrylontrile-butadiene copolymer (in a 60—80:40—20 weight ratio); or (b) a similar amount of a similar styrene-acrylonitrile copolymer graft polymerized onto a similar amount of a polybutadiene homopolymer. The butadiene containing polymer or copolymer is formed by emulsion polymerization, whereas the styrene-acrylonitrile copolymer is formed by suspension polymerization.

The gist of the present invention comprises the use of homogenization during the emulsion polymerization portion or portions of the aforementioned types of procedures to mechanically emulsify the desired monomers and thereby produce a reduction in the amount of emulsifier that needs to be utilized in that portion of the overall process. By using this technique, the amount of emulsifier that is used can be reduced from the more typical conventional range of from about 1% to about 5%, by weight of the monomers, preferably from about 1% to about 2%, to a much lower level of from about 0.3% to about 0.75%.

In the case of procedures involving more than one emulsion polymerization step, the homogenization procedure is preferably performed in each separate polymerization step to achieve the greatest degree of improvement, although benefits of a more reduced level are nevertheless realized if the homogenization procedure is performed in less than all of the emulsion steps when more than one such emulsion polymerization step is present. The emulsion and suspension polymerization portions of the present invention can be carried out in either the same reactors or in different reactors.

Any suitable apparatus can be used to mechanically disperse the monomers in the water which forms the major component of the polymerization reaction medium. The monomer-water mixture (optionally in the presence of the aforementioned small amounts of emulsifier) is then agitated for a sufficient period of time to form a stable homogenized solution, for example, from about 5 to about 90 minutes. The preferred time for homogenization exceeds about 30 to 40 minutes. The time needed to achieve such homogenization will depend upon such variables as the capacity of the apparatus, the type of monomer or monomers to be polymerized, the amount of monomer in the water solvent, the type and amount of any optional emulsifier or emulsifiers, and the like. When this stable, homogenized solution is formed, it can be combined with the other components of the reaction medium (for example, an emulsion polymerization initiator, buffers, and other conventional emulsion polymerization reactants) and can be heated to the appropriate polymerization temperature for the appropriate length of time to achieve the desired degree of polymerization. The latex (or product therefrom) resulting from the improved emulsion polymerization process of the present invention is then used as an ingredient in one or more later aqueous suspension polymerization procedures, wherein a suspending agent is contained in the reaction medium along with one or more suspension polymerization initiators and other conventional reactants.

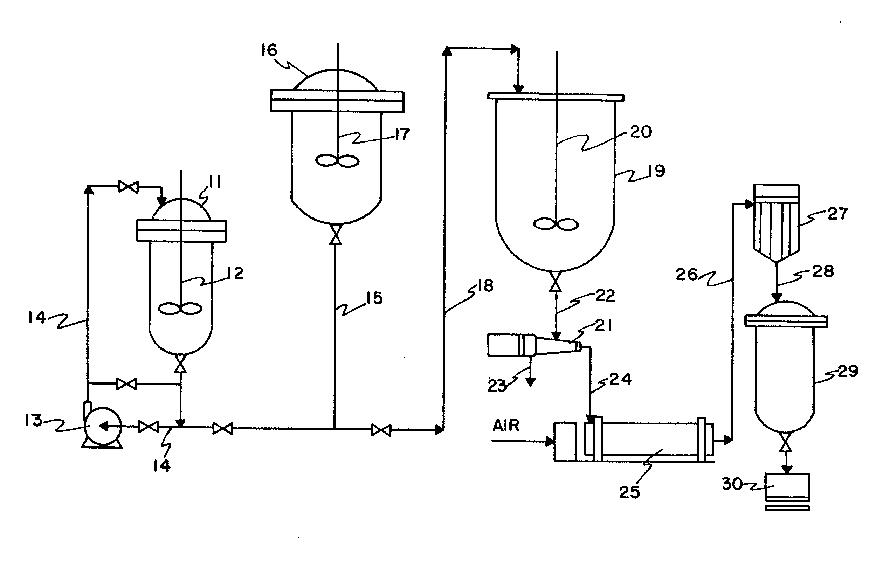

The invention will now be further described with reference to the drawing which is a typical flow diagram for a commerical scale operation for the embodiment of the present invention which is described later in this specification in Example 1.

The first portion of the reaction can be conducted in reactor 11 which is equipped with suitable agitation means 12. A suitable homogenizer 13 (Tekmar Dispax Reactor Type DR-3-13-4) having a suitable homogenization rate (e.g., 378.5 liters of solution per minute) can be placed in feed line 14 so as to be capable of homogenizing the reactor batch which can then be recirculated back to reactor 11 for the emulsion polymerization of the reagents contained therein.

After the first portion of the reaction is concluded, the product latex can be transferred through lines 14 and 15 to reactor 16 (which is preferably also equipped with agitator means 17) for the suspension polymerization portion of the reaction.

Upon termination of the suspension polymerization step, the aqueous medium containing the final emulsion/suspension polymer product can be transferred via lines 15 and 18 to a suitable blend tank 19 also equipped with an agitator 20 for keeping the polymer particles suspended in the aqueous solvent medium in the form of a slurry. A wet cake of the desired product can then be separated from the water phase by means of centrifuge 21 after transfer thereto through line 22. The separated water is removed through line 23 from the centrifuge.

The desired product wet cake from the centrifuge 21 is then transferred via line 24 to a rotary dryer 25, and the dried product from the dryer is then transferred through line 26 to a bag house 27 to separate the resin from the air stream. The resin drops through line 28 to check bin 29 and then to appropriate storage means (not shown) which can be an appropriate storage silo. From the storage means, the product can then be transferred to appropriate container means 30 for shipment to the desired customer.

The following Examples illustrate certain preferred embodiments of the present invention.

Example 1

This Example illustrates the process of the present invention in making the acrylate-styrene-acrylonitrile composition described in U.S. Patent No. 3,944,631 to A. J. Yu et al.

The first portion of the reaction was conducted in a 15,140 liter reactor equipped with an agitator and consisted of the first two polymerization steps shown in U.S. Patent No. 3,944,631 wherein an interpolymer comprising crosslinked polybutyl acrylate and crosslinked styrene-acrylonitrile polymeric components was formed. The following ingredients were used in this aspect of the process:

| Ingredients | Amount |
| --- | --- |
| Butyl acrylate monomer | 1480 kg. |
| Butylene glycol diacrylate crosslinker | 3.9 kg. |
| Deionized water | 2764 kg. |
| Stearyl alcohol lubricant | 17.7 kg. |
| Sodium bisulfite initiator | 454 gm. |
| Sodium lauryl sulfate emulsifier solution (30 wt. % active) (SIPEX-UB, Trade Mark, from Alcolac, Inc.) | 6.8 kg. |
| Sodium isodecyl sulfosuccinate emulsifier solution (50 wt. % active) (AEROSOL A-268, Trade Mark, from American Cyanamid) | 17.7 kg. |
| Ammonium persulfate initiator solution/Deionized water mixture | 1.36 kg./9 kg. |
| Sodium bisulfite initiator/Deionized water mixture | 227 gm./2.27 kg. |
| Divinyl benzene crosslinker | 5.6 kg. |
| Styrene monomer | 392.7 kg. |
| Acrylonitrile monomer | 143 kg. |
| Deionized water | 469 kg. |

The following procedure was used:

(1) Butyl acrylate (153.5 kg.) and butylene glycol diacrylate (3.9 kg.) were charged into a container and were thoroughly mixed;

(2) The stearyl alcohol lubricant was charged into the reactor along with the remaining butyl acrylate and the mixture from Step 1. The mixture from this step was then circulated through the homogenizer for 10 minutes to mix it more completely;

(3) The sodium lauryl sulfate and disodium isodecyl sulfosuccinate were premixed in 18.9 kg. of deionized water and were charged into the reactor through a defoamer pot;

(4) The sodium bisulfite was dissolved in 18.9 kg. of deionized water and was also charged into the reactor through a defoamer pot;

(5) The reactor agitator was turned to a slow speed setting and 2650 kg. of deionized water was added to the reactor;

(6) The mixture in the reactor was circulated through the homogenizer until the solution was fully homogenized. The homogenization lines were then flushed with 75.7 kg. of deionized water;

(7) During homogenizer step (6), the reactor was evacuated to a pressure of 0.34 kg./cm.$^2$ and was purged three times with nitrogen gas to a final pressure of 3.52 kg./cm.$^2$ (gauge);

(8) After steps (6) and (7) were completed, deionized water (4695 kg.) was charged into the reactor, and the batch was brought to 54.5°C.;

(9) When the batch reached 54.5°C., the ammonium persulfate initiator (1.36 kg.) and water (9 kg.) solution was pumped in at a rate of 1.5 kg./min. to initiate the polymerization. When the temperature began to fall, 454 gm. of ammonium persulfate in 4.5 kg. of deionized water was added. The polymerization reaction was allowed to proceed at 54°C.;

(10) Styrene (130 kg.), acrylonitrile (47.7 kg.) and divinyl benzene (1.87 kg.) were then mixed into each of three clean drums and the mixtures were stirred well;

(11) After about one hour had elapsed for the reaction in step (9), the total solids percentage was checked for a latex sample from the reactor, and the three drums of material from step (10) were added to the reactor without agitation. The reactor was purged with nitrogen as described for step (7), and the batch was heated to 54.4°C.;

(12) The reaction described in step (11) was continued at 54.4°C. until the temperature began to decrease, and a mixture of ammonium persulfate (454 gm.) and deionized water 4.5 kg. was added; and

(13) One half hour after the difference between the batch and jacket temperature became zero

4

(indicating no more generation of heat due to imminent completion of the reaction), the agitator was turned off, and the reaction mixture was allowed to stand for 1.5 hours.

The second portion of the reaction was conducted in a 22,710 liter reactor equipped with an agitator. It involved the last polymerization step shown in U.S. Patent No. 3,944,631 wherein the uncrosslinked styrene-acrylonitrile component was formed in the presence of the previously formed interpolymer. The following ingredients were used in this aspect of the process:

| Ingredient | Amount (in kg.) |
|---|---|
| Styrene monomer | 2152 |
| Acrylonitrile monomer | 939.8 |
| Normal dodecyl mercaptan chain transfer agent | 9.8 |
| Stearyl alcohol lubricant | 17.7 |
| Sodium lauryl sulfate (SIPEX UB) | 2.8 |
| Polyvinyl pyrrolidone suspending agent | 5.6 |
| Methyl cellulose suspending agent | 11.1 |
| Deionized water | 4657 |
| Azobisisobutyronitrile initiator | 2.7 |
| Sodium bicarbonate buffer | 13.6 |
| Butylated hydroxytoluene | 2.3 |

The following procedure was used:

(1) The stearyl alcohol, normal dodecyl mercaptan, styrene and acrylonitrile were added to the reactor and were mixed for 10 minutes;

(2) With the agitator in the reactor at a speed of 80 r.p.m., the polyvinyl pyrollidone solution, sodium lauryl sulfate, and sodium bicarbonate were added to the mixture resulting from step (1), and agitation was continued for 10 minutes. The agitator was then turned off, and the latex from the previous step of the process was added. The agitator was then turned on and set at 80 r.p.m. for 30 minutes. Deionized water (3290.34 kg.) was then added;

(3) The suspending agent was predispersed in a mixing tank in about 378.6 kg. of water, which was at 71.1°C. or higher, and this mixture was agitated at this temperature for about 1 hour. Cold water (about 757 kg.) was then added to the mixing tank, and the solution was allowed to cool. Agitation was continued until the solution turned clear, and it was then added to the reactor. Two hundred twenty-seven and two-tenths (227.2) kilograms of water was used to flush the mixing tank and lines leading to the reactor. Agitation was continued in the reactor for an additional two hours;

(4) The azobisisobutyronitrile initiator was then added to the reactor;

(5) With the agitation rate set at 80 r.p.m., the reactor was purged with nitrogen three times as described in connection with the first aspect of the reaction;

(6) The temperature of the reaction medium was then set at 71.1°C.;

(7) When the temperature differential between the batch and the reactor jacket began to fall, thereby signalling the near completion of the reaction, an additional 454 gm. of initiator was added in order to aid in conversion of the remaining residual monomers;

(8) The reaction was allowed to continue until the difference in temperature between the reaction mixture and the jacket of the reactor became zero. Two hours after this occurred, butylated hydroxytoluene (2.27 kg.) was added to terminate the reaction, and the reactor was cooled and vented to suitable recovery equipment.

The product from the reactor was centrifuged to form a wet cake having a moisture content of about 25%, by weight, and the wet cake was dried in a rotary dryer to a moisture content of about 1%, by weight. The material had an Izod impact of about 5.34 Joule/cm. and a heat distortion temperature of about 88°C. The reactor wall fouling was lighter than would result from a conventional non-homogenizer emulsion/suspension procedure, and the polymer deposits which occurred were easily removed by washing with an organic solvent.

# 0 006 697

Example 2

This Example 2 illustrates the physical properties of a series of acrylate-styrene-acrylonitrile compositions made by the general procedure described in Example 1.

Screen analysis of the products from each batch run yielded the following data:

Screen analysis (% retained)

| Sample no. | Mesh size | | | |
|---|---|---|---|---|
| | 40 | 60 | 80 | 100 |
| 1 | 56.0 | 31.5 | 4.7 | 2.0 |
| 2 | 40.8 | 37.5 | 8.1 | 3.1 |
| 3 | 36.4 | 41.0 | 8.8 | 3.0 |
| 4 | 12.0 | 44.5 | 12.5 | 6.1 |
| 5 | 54.3 | 32.4 | 4.1 | 1.9 |
| 6 | 67.9 | 24.7 | 2.6 | 0.7 |
| 7 | 22.9 | 40.3 | 14.3 | 5.2 |

Screen analysis (% retained)

| Sample no. | Mesh size | | |
|---|---|---|---|
| | 140 | 200 | Pan |
| 1 | 2.6 | 2.1 | 2.6 |
| 2 | 5.0 | 3.5 | 4.2 |
| 3 | 4.4 | 3.1 | 4.5 |
| 4 | 10.1 | 7.8 | 8.3 |
| 5 | 2.0 | 1.8 | 3.1 |
| 6 | 1.3 | 1.1 | 2.3 |
| 7 | 7.5 | 4.9 | 5.7 |

Other pertinent physical properties for the above samples were as follows:

6

| Sample no. | Bulk density (gm./cc.) | Izod impact (Joule/cm.) Vent | Gate |
|---|---|---|---|
| 1 | 0.481 | 5.13 | 6.09 |
| 2 | 0.472 | 5.02 | 5.77 |
| 3 | 0.468 | 4.75 | 5.55 |
| 4 | 0.444 | 4.81 | 5.71 |
| 5 | 0.446 | 4.64 | 5.45 |
| 6 | 0.424 | 4.32 | 4.59 |
| 7 | 0.384 | 5.13 | 5.39 |

| Sample no. | Tensile str. (Newtons/cm.$^2$) | HDT (°C.) | Elong % |
|---|---|---|---|
| 1 | 3740 | 85.6 | 78 |
| 2 | 3701 | 85.6 | 78 |
| 3 | 3789 | 87.8 | 72 |
| 4 | 4060 | 90 | 72 |
| 5 | 3883 | 86.7 | 74 |
| 6 | 3883 | 87.8 | 62 |
| 7 | 4424 | 90.0 | 54 |

These data illustrate that the polymers that resulted had rather consistent physical properties from batch to batch, especially the high Izod impact and high heat distortion temperature (HDT) values.

The Izod impact, tensile strength, heat distortion temperature and elongation values were determined on injection molded samples of the resin particles. The terms "vent" and "gate" indicate the impact resistance for those ends of the injection molded test piece adjacent either the vent opening and the gate entrance of the molding apparatus, respectively.

Example 3

This Example illustrates the variation in flocculation as a function of the time of homogenization. Generally, an increase in the time of homogenization will yield a lower amount of flocculation. The general procedure of Example 1 was employed using, as the emulsifiers, 0.138 parts by weight of sodium lauryl sulfate emulsifier solution (SIPEX-UB) and 0.598 parts by weight of disodium isodecyl sulfosuccinate emulsifier solution (AEROSOL A-268), per 100 parts by weight of monomer.

| Batch no. | Homogenization time (min.) | Average particle size cm$^{-4}$ | Weight of flocculant -wet (kg.) |
|---|---|---|---|
| 1 | 20 | 0.28 | 36.32 |
| 2 | 30 | 0.22 | nil |
| 3 | 35 | 0.25 | 22.70 |
| 4 | 45 | 0.25 | nil |

7

**Claims**

1. A plant scale aqueous, emulsion/suspension polymerization process for forming polymeric materials comprising at least one emulsion polymerization reaction of monomer in water with the aid of an emulsifier and at least one subsequent suspension polymerization process in which the emulsion polymerization product is used as a reaction ingredient, characterized in that the monomer in water is subjected to mechanical homogenisation prior to the emulsion polymerization reaction, both the mechanical homogenisation and the emulsion polymerization being effected in the presence of a reduced amount of emulsifier compared to that conventionally used when homogenisation is not employed.

2. A process as claimed in claim 1 characterised in that the reduced amount of emulsifier used is within the range of 0.3% to 0.75% by weight of the monomers.

3. A process as claimed in claim 1 or claim 2 characterised in that the homogenisation is conducted for a period of time of from 5 to 90 minutes.

4. A process as claimed in any of claims 1 to 3 characterised in that the monomer that is polymerized in the emulsion polymerization process is one which will form a rubbery polymer.

5. A process as claimed in any of claims 1 to 4 characterised in that the monomer that is polymerized in the emulsion polymerization process is an acrylic, methacrylic, or olefinic monomer.

6. A process as claimed in claim 4 or claim 5 characterised in that there is an effective amount of crosslinker monomer present during the emulsion polymerization.

7. A process as claimed in claim 1 characterized in that the monomer which is polymerized during the suspension polymerization process is one which will form a rigid polymer.

8. A process as claimed in claim 7 characterized in that the monomer is a vinyl halide, styrene or acrylonitrile.

9. Polymers when prepared by a process as claimed in any of claims 1 to 8.


**Patentansprüche**

1. Großtechnisches Polymerisationsverfahren zur Herstellung von Polymeren in wässriger Emulsion/ Suspension, bei dem mindestens eine Emulsionspolymerisation eines Monomers in Wasser unter Zuhilfenahme eines Emulgators und mindestens eine anschließende Suspensionspolymerisation durchgeführt werden, bei der das Emulsionspolymerisationsprodukt als Reaktant eingesetzt wird, dadurch gekennzeichnet, daß das Monomer im Wasser vor der Emulsionspolymerisation einer mechanischen Homogenisierung unterzogen wird, wobei sowohl die mechanische Homogenisierung als auch die Emulsionspolymerisation in Gegenwart einer geringeren Menge Emulgator durchgeführt wird als sonst gebräuchlicherweise erforderlich, wenn keine Homogenisierung durchgeführt wird.

2. Verfahren nach Anspruch 1, dadurch gekennzeichnet, daß die verminderte Menge Emulgator im Bereich von 0,3 bis 0,75 Gew.-% der Monomeren liegt.

3. Verfahren nach einem der Ansprüche 1 oder 2, dadurch gekennzeichnet, daß die Homogenisierung 5 bis 90 min durchgeführt wird.

4. Verfahren nach einem der Ansprüche 1 bis 3, dadurch gekennzeichnet, daß das durch die Emulsionspolymerisation zu polymerisierende Monomer ein gummiartiges Polymer bildet.

5. Verfahren nach einem der Ansprüche 1 bis 4, dadurch gekennzeichnet, daß das durch die Emulsionspolymerisation polymerisierte Monomer ein Acrylmonomer, Methacrylmonomer oder ein olefinisches Monomer ist.

6. Verfahren nach einem der Ansprüche 4 oder 5, dadurch gekennzeichnet, daß die Emulsionspolymerisation in Gegenwart einer wirksamen Menge eines Vernetzermonomers durchgeführt wird.

7. Verfahren nach Anspruch 1, dadurch gekennzeichnet, daß das durch die Suspensionspolymerisation zu polymerisierende Monomer ein starres Monomer bildet.

8. Verfahren nach Anspruch 7, dadurch gekennzeichnet, daß das Monomer ein Vinylhalogenid, Styrol oder Acrylnitril ist.

9. Polymer, hergestellt durch ein Verfahren nach einem der Ansprüch 1 bis 8.


**Revendications**

1. Procédé à l'échelle industrielle de polymérisation en émulsion/suspension aqueuse pour former des matières polymères comprenant au moins une réaction de polymérisation en émulsion d'un monomère dans l'eau avec l'aide, d'un émulsifiant et au moins une opération ultérieure de polymérisation en suspension dans laquelle on utilise comme un ingrédient réactionnel le produit de la polymérisation en émulsion, caractérisé en ce que monomère dans l'eau est soumis à une homogénéisation mécanique avant la réaction de polymérisation en émulsion, l'homogénéisation mécanique et la polymérisation en émulsion étant toutes deux effectuées en présence d'une quantité d'émulsifiant réduite par rapport à celle utilisée classiquement lorsqu'on n'emploie pas d'homogénéisation.

2. Un procédé comme revendiqué dans la revendication 1, caractérisé en ce que la quantité réduite d'émulsifiant utilisée est dans la gamme de 0,3% à 0,75% par rapport au poids des monomères.

3. Un procédé comme revendiqué dans la revendication 1 ou la revendication 2, caractérisé en ce qu'on effectue l'homogénéisation pendant une période de 5 à 90 minutes.

4. Un procédé comme revendiqué dans l'une quelconque des revendications 1 à 3, caractérisé en ce que le monomère que l'on polymérise dans le procédé de polymérisation en émulsion est un monomère qui forme un polymère caoutchouteux.

5. Un procédé comme revendiqué dans l'une quelconque des revendications 1 à 4, caractérisé en ce que le monomère que l'on polymérise dans le procédé de polymérisation en émulsion est un monomère acrylique, méthacrylique ou oléfinique.

6. Un procédé comme revendiqué dans la revendication 4 ou la revendication 5, caractérisé en ce qu'une quantité efface d'un réticulant monomère est présente pendant la polymérisation en émulsion.

7. Un procédé comme revendiqué dans la revendication 1, caractérisé en ce que la monomère que l'on polymérise pendant le procédé de polymérisation en suspension est un monomère qui forme un polymère rigide.

8. Un procédé comme revendiqué dans la revendication 7, caractérisé en ce que le monomère est un halogénure de vinyle, le styrène ou l'acrylonitrile.

9. Polymères que l'on a préparés selon un procédé comme revendiqué dans l'une quelconque des revendications 1 à 8.